# EUROPEAN PATENT APPLICATION

(11) **EP 3 012 797 A1**
(43) Date of publication of application: **27.04.2016**
(21) Application number: 15191083.3
(22) Date of filing: 22.10.2015
(51) Int. Cl.: G06Q 30/02, G06Q 50/00

(54) **ELECTRONIC DEVICE AND METHOD OF OPERATING CONTENT RECEIVER RECOMMENDATION SERVICE**

(30) Priority: 23.10.2014 KR 20140144386
(71) Applicant: Samsung Electronics Co., Ltd., Gyeonggi-do 16677 (KR)
(72) Inventor: Park, Sangwook, Suwon-si 16677 (KR); Kim, Hyun, Suwon-si 16677 (KR); Park, Chanpyo, Suwon-si 16677 (KR)
(74) Representative: Nederlandsch Octrooibureau

(57) **Abstract**

Disclosed is an electronic device that includes: a communication unit configured to communicate with an external device to transmit and receive information; a display unit that is configured to display location information and shared content; and a controller that is configured to process information on recommended content receivers that are selected in regard to the current location of the electronic device in a list of friends registered in the electronic device through the communication unit, and to display the information on recommended content receivers on the display unit in response to input.

## Description

### BACKGROUND

### 1. Field of the invention

The present disclosure relates to an electronic device and a content receiver recommendation service operating method in location information based content sharing.

### 2. Description of the Prior Art

With the development of hardware and communication technologies, electronic devices have been used in various fields and have provided various functions required by users. Location-based services (LBSs) that utilize location information acquired through a mobile communication network, a GPS, or the like have become an issue due to a function of distinguishing between existing online services and mobile services and have been developed as various types of services.

In recent years, a lot of attention has been paid to location based social network services (SNSs) that can share a user's location information and relevant information through a combination of a GPS embedded in an electronic device and a social network service (SNS).

### SUMMARY

In the use of location-based social network services, it is vital to share location information with limited sharing counterparts rather than all counterparts on account of concerns over abuse of personal information, invasion of privacy, etc. Due to this, when an electronic device user wants to share location information or location-based relevant information, the user has to manually select friends one-by-one in a friend list (e.g., a contact list) registered, or stored, in a specific electronic device.

Various embodiments of the present disclosure provide a method for providing a content receiver recommendation service and an electronic device for the same that can recommend content receivers by identifying users' interest and surrounding users when an electronic device user wants to share location-related information with another electronic device user.

Various embodiments of the present disclosure provide an electronic device that includes: a communication unit that is configured to communicate with an external device to transmit and receive information; a display unit that is configured to display location information and shared content; and a controller that is configured to process information on persons recommended as content receivers (hereinafter, "recommended content receivers") that are selected in regard to the current location of the electronic device in a list of friends registered in the electronic device through the communication unit, and to display the information on recommended content receivers on the display unit in response to a content receiver display request input.

Various embodiments of the present disclosure provide a method of operating a content receiver recommendation service by an electronic device, including: executing an application that supports a location-based service; detecting an input for requesting the display of content receiver recommendation information in the executed application; and displaying, on a display unit, information on recommended content receivers that are selected from a friend list based on the current location in response to the detected input.

The method and device for providing a content receiver recommendation service, according to the various embodiments of the present disclosure, can automatically recommend a counterpart that will share content associated with a current location and provide the counterpart to a user by determining friends' location information and interest based on current location information. According to the present disclosure, a user can easily identify friends close to his/her current location or friends who are interested in the current location through a simple and convenient operation and share current-location-based relevant content with the friends, thereby increasing the correlation of the shared content.

According to the present disclosure, friends associated with a user's current location can be automatically recommended so that the problem of manually selecting sharing counterparts can be solved, and a decision-making operation can be simplified, thereby enhancing usability and convenience of an electronic device and thus activating location-based sharing services.

### BRIEF DESCRIPTION OF THE DRAWINGS

The above features, and advantages of the present disclosure will be more apparent from the following detailed description in conjunction with the accompanying drawings, in which:
FIG. 1 is a diagram illustrating a content receiver recommendation service operating system according to various embodiments;
FIG. 2 is a block diagram schematically illustrating a configuration of an electronic device according to various embodiments;
FIG. 3 is a diagram schematically illustrating an operation of a content receiver recommendation service operating system according to various embodiments;
FIG. 4 is a flowchart illustrating an operation of selecting, by a server, a person to be recommended according to various embodiments;
FIG. 5 is a flowchart illustrating an operation of selecting, by a server, a person to be recommended according to various embodiments;
FIG. 6 illustrates an example of a content receiver recommendation service screen in an electronic device according to various embodiments;
FIG. 7 is a flowchart illustrating a method of recommending a content receiver by an electronic device according to various embodiments;
FIG. 8 illustrates an example of a content receiver recommendation UI of an electronic device according to various embodiments;
FIG. 9 is a flowchart illustrating a method of operating, by an electronic device, information on a group of recommended content receivers, according to various embodiments;
FIG. 10 is a flowchart illustrating a method of operating a content receiver recommendation service by a reception side electronic device according to various embodiments; and
FIG. 11 illustrates an example of a sharing group creation screen of a reception side electronic device according to various embodiments.

### DETAILED DESCRIPTION

Hereinafter, various embodiments will be described in detail with reference to the accompanying drawings. It should be noted that the same elements will be designated by the same reference numerals although they are shown in different drawings. Further, a detailed description of a known function and configuration which may make the subject matter of the present disclosure unclear will be omitted. Hereinafter, it should be noted that only the descriptions will be provided that may help understanding the operations provided in association with the various embodiments of the present disclosure, and other descriptions will be omitted to avoid making the subject matter of the present disclosure rather unclear.

An electronic device and a method of operating a content receiver recommendation service will be hereinafter described with reference to the drawings.

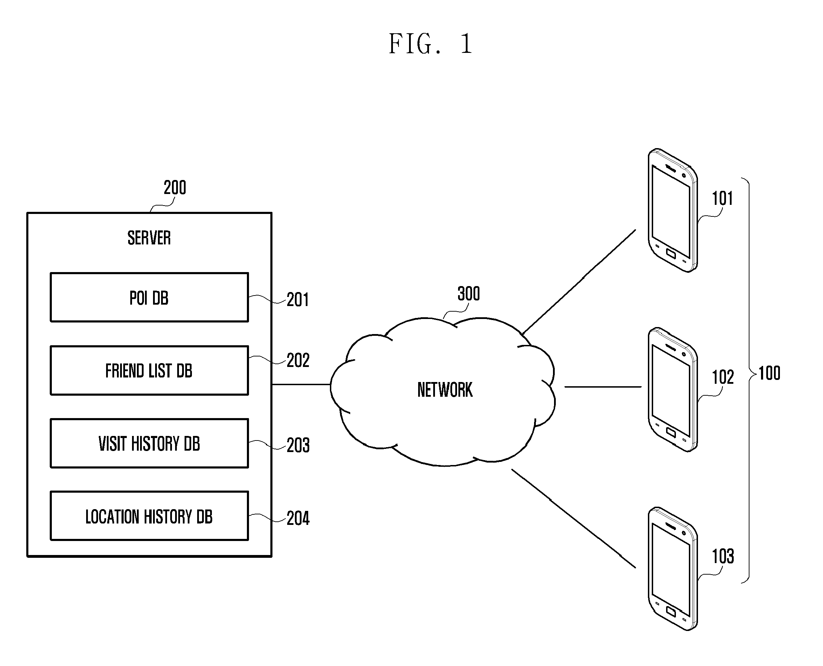

FIG. 1 is a diagram illustrating a content receiver recommendation service operating system according to various embodiments.

Referring to FIG. 1, the content receiver recommendation service operating system, according to the various embodiments, may include one or more electronic devices 100 (101, 102, and 103) and a server 200 that supports a content receiver recommendation service.

The electronic devices 100 (101, 102, and 103) may establish a communication connection with the server 200. Although not illustrated, the electronic devices 100 (101, 102, and 103) and the server 200 may further include a network module for supporting data transmission/reception.

According to an embodiment, each of the electronic devices 100 may connect to the server 200 to register, in advance, in a location sharing service. The electronic device 100 may perform an authentication procedure (e.g., inputting ID information and a password) with the server 200 to register in the location sharing service, and may provide a friend list (e.g., contact list) registered therein and identification information of friends' electronic devices (e.g., friends' phone numbers).

The electronic device 100 may provide current location information (e.g., coordinates) to the server 200. For example, the electronic device 100 may transmit the current location information to the server 200 in response to execution of an application/function that supports a location-based service (hereinafter, referred to as a location-based application/function). The location-based application/function may be all functions or applications that can share location information and related information, such as a map service, a location based social network service, etc.

The electronic device 100 may also provide the current location information to the server 200 in response to receiving a signal for requesting the current location information from the server. The electronic device 100 may provide the current location information to the server 200 periodically or at a preset time interval.

The electronic device 100 may provide the current location information or information on a point of interest to a user based on map data. For example, the electronic device 100 may map the location information and the information on a point of interest onto the map data to display them on a display unit. Alternatively, the electronic device 100 may also output, on the map data, location information of friends registered through the server 200.

The electronic device 100 may detect a user input for adding or changing a point of interest for a specific location (or place) through a location-based application/function, and may transmit information on the adding or changing of the point of interest to the server 200 in response to the detection.

The electronic device 100 may transmit, to the server 200, a content receiver search request signal for searching for content receivers associated with the current location, and may receive, from the server 200, information on recommended content receivers associated with the current location in the friend list registered therein in response to the request signal.

The electronic device 100 may provide a content receiver recommendation UI (screen) to a user through the display unit based on the information on recommended content receivers, which is provided from the server 200. For example, the electronic device 100 may output the content receiver recommendation UI on the display unit in response to a user input for requesting recommended content receivers. The information on recommended content receivers may be friend information that is selected based on one or more of the following: a friend having taken a photo at the current location of the electronic device, a friend having visited the current location of the electronic device, a friend having registered the current location of the electronic device as a point of interest (e.g., detect a user input for adding a point of interest for a location (or place) of sharing information through a location-based application/function), a friend existing within a preset radius (e.g., 4 kilometers) based on the current location of the electronic device, and a friend having visited a location within the preset radius within a preset time.

The server 200 that supports the content receiver recommendation service may support driving of the electronic device 100 by performing at least one of the operations implemented in the electronic device 100. The server 200 may perform a function or service to be executed in the electronic device 100 instead of the electronic device 100 automatically or according to a request, and may provide performance information to the electronic device 100.

Based on the identification (ID) information of the electronic device 100, the server 200 may record and manage location information, place information, friend list information, and information on a visit to a specific place of the corresponding electronic device 100.

The server 200, according to an embodiment, may include point of interest (POI) database (DB) 201, a friend list DB 202, a visit history DB 203, and a location history DB 204. The POI DB 201 may be a database in which location coordinates are stored to correspond to a specific trade name or place name, such as a main facility, a hotel, a station, a building, etc. The friend list DB 202 may be a database in which information on a friend list registered in an electronic device is stored according to electronic devices. The visit history DB 203 may be a database that stores a history in which an electronic device user has visited a specific place or information on a point of interest that a user has registered. The location history DB 204 may be a database that stores the current location and a moving path of an electronic device.

The server 200 may receive, from the electronic device 100, at least one of current location information and information on recommending or changing a point of interest. The server 200 may analyze the location information of the electronic device 100 to analyze a visited place, a point of interest, a moving path of the electronic device 100.

The server 200 may provide map data corresponding to the current location to the electronic device 100. The server 200 may provide information on recommended content receivers, which is associated with the current location, together with the map data to the electronic device 100.

The server 200 may select friends having high correlation to the current location to be persons to be recommended as content receivers based on the location information of the electronic device 100.

According to an embodiment, the server 200 may identify a speci fic place (or a specific trade name) corresponding to the location of the electronic device through the POI DB 201, and may identify a broader category to which the specific place pertains.

For example, in cases where an Italian restaurant "Glida" near the Gangnam station is the specific place, the higher category may be a category classified as an Italian restaurant. The server 200 may select friends that have registered the Italian restaurant "Glida" as a point of interest or have visited a place classified as an Italian restaurant among the friends registered in the electronic device by using the friend list DB 202 and the visit history DB 203, and may determine the selected friends to be persons to be recommended as content receivers.

According to an embodiment, the server 200 may select friends existing within a preset radius from the current location of the electronic device 100 to be persons to be recommended as content receivers. Further, the server 200 may preferentially determine friends, who stay for a longer time based on the time when the friends are located at the current location, to be persons to be recommended as content receivers by using the visit history DB 203 and the location history DB 204.

The server 200 may receive a signal for making a request for searching for a sharer from the electronic device 100, select friends to be recommended based on the current location in the friend list registered in the electronic device 100 in response to the signal, and transfer information on the selected friends as recommended content receivers to the electronic device 100.

The server 200 may also provide, to the electronic device 100, location information of associated friends in regard to the current location of the electronic device.

A network, according to an embodiment, may be a telecommunication network. The telecommunication network may include at least one of a computer network, the Internet, Internet of Things, and a telephone network.

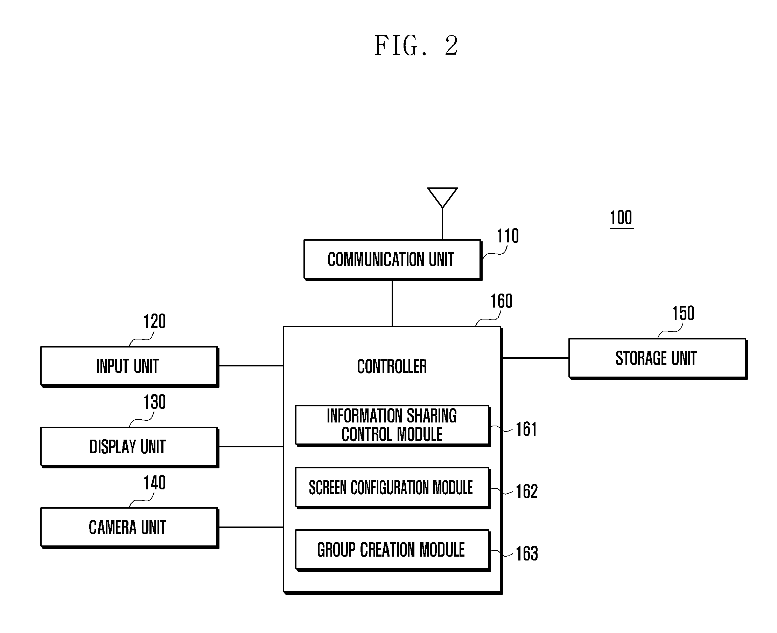

FIG. 2 is a block diagram schematically illustrating a configuration of an electronic device according to various embodiments.

Referring to FIG. 2, the electronic device (e.g., reference numeral 100 of FIG. 1), according to the various embodiments, may include a communication unit 110, an input unit 120, a display unit 130, a camera unit 140, a storage unit 150, and a controller 160.

The communication unit 110 may be connected to a network through wireless/wired communication to perform a voice, video, or data communication with an external device (e.g., another electronic device, a server, etc.) under the control of the controller 160. The wireless communication may include at least one of, for example, Wi-Fi (Wireless Fidelity), Bluetooth (BT), Near Field Communication (NFC), Global Positioning System (GPS), and cellular communication (e.g., LTE, LTE-A, CDMA, WCDMA, UMTS, WiBro, or GSM). The wired communication may include at least one of, for example, a universal serial bus (USB), a high definition multimedia interface (HDMI), recommended standard 232 (RS-232), and a plain old telephone service (POTS).

According to an embodiment, the communication unit 110 may further include a location-calculating module for acquiring the location of the electronic device. The location calculating module may be a global positioning system (GPS) module, and may calculate current location information of the electronic device. The location calculating module may calculate three-dimensional information on the current location according to a latitude, a longitude, and an altitude, by calculating information on a distance away from three or more base stations and time information, and then applying trigonometry to the calculated information. Alternatively, the location-calculating module may calculate location information by continually receiving information on the current location of the electronic device from three or more satellites in real time. The location information of the electronic device may be acquired by a variety of methods. For example, the location-calculating module may acquire the initial location information from at least one of a location value acquired by using a base station signal (radio location technology by a network based method), a location value acquired by using information of a wireless access point (AP) which is received through Wi-Fi (Wi-Fi positioning service (WPS) technology), a location value acquired from a fixed Global Natvigation Satellite System (GNSS), etc.

The communication unit 110 may transmit/receive current location information, information on registration or change of a point of interest, information on recommended content receivers, content receiver group information, and location information of friends to/from a server (e.g., reference numeral 200 of FIG. 1), which supports a location-based service or a content receiver recommendation service, under the control of the controller.

The input unit 120 may include at least one of a touch panel, a pen sensor, and a key. The touch panel may recognize a user's touch input based on at least one of, for example, a capacitive type, a resistive type, an infrared type, and an acoustic wave type. The touch panel may further include a controller (not illustrated). Meanwhile, in the case of a capacitive-type touch panel, proximity awareness may be possible in addition to a direct touch. The pen sensor may be implemented by using a separate pen recognition sheet, for example, in the same manner as receiving a user's touch input.

The input unit 120 may generate a signal related to user setting and function control of the electronic device 100, and may transfer the generated signal to the controller 160.

The display unit 130 may perform a function of displaying an image or data to a user. The display unit 130 may include a display panel. The display panel may employ, for example, a liquid crystal display (LCD) or an active matrix organic light-emitting diode (AM-OLED). The display unit 130 may further include a controller that controls the display panel. The display panel may be implemented to be, for example, flexible, transparent, or wearable. Meanwhile, the display unit 130 may be coupled to a touch panel to constitute a single module (e.g., a touch screen).

The display unit 130 may display various screens according to operating applications/functions by the electronic device 100, for example, a location-based application/function operation screen (e.g., a map service based location information display screen, a content receiver recommendation screen, a sharing group creation request screen, etc.).

The camera unit 140 may be a device that can take a still image or a moving image. The camera unit 140, according to an embodiment, may include one or more image sensors (e.g., a front sensor or a back sensor), a lens, an image signal processor (ISP), or a flash (e.g., an LED or a xenon lamp).

The storage unit 150 may store commands or data received from, or generated by, the controller 160 or other elements (e.g., the display unit 130, the communication unit 110, etc.). For example, the storage unit 150 may store an operating system (OS) for booting the electronic device 100 and operating the above-described elements, at least one application program, a message transmitted/received to/from a network, data according to execution of an application, etc.

The storage unit 150 may include, for example, programming modules such as a kernel, middleware, an application programming interface (API), an application, and the like. Each of the aforementioned programming modules may be formed of software, firmware, hardware, or a combination of at least two thereof.

The controller 160 may, for example, receive commands from the aforementioned other elements (e.g., the communication unit 110, the input unit 120, the display unit 130, etc.), decode the received commands, and perform operations or data processing according to the decoded commands. For example, the controller 160, when supplied with electric power, may control the booting process of the electronic device 100 and execute various types of application programs stored in a program area in order to execute functions according to a user's setting. The controller 160 may include one or more application processors (APs) or one or more communication processors (CPs).

The controller 160 may include an information sharing control module 161, a screen configuration module 162, and a group creation module 163.

The information sharing control module 161 may transmit/receive location information related data in conjunction with the server 200 that supports a location-based service or a content receiver recommendation service.

The information sharing control module 161 may periodically measure current location information and may transmit the current location information to the server 200 with a user's approval in regard to a location based application/function.

The information sharing control module 161 may control to transmit a content receiver search request signal to the server 200 in response to a request for executing the location-based application/function and to receive information on recommended content receivers in a friend list from the server 200.

The information sharing control module 161, when receiving a signal for requesting current location information from the server 200, may transmit the current location information to the server 200 in response to the signal.

In response to a user input for adding or changing the current location information to a point of interest, the information sharing control module 161 may transmit information on adding or changing a point of interest to the server 200, or may store the information in the storage unit 150.

In an embodiment, the information sharing control module 161 may control to set access authority according to sharing grades, such as all sharing, friend sharing, and secret sharing, in regard to the location-based application/function and to share current location information or content with the server 200 or other electronic devices registered in the electronic device according to the set authority. The sharing grades may be set through the location-based application/function.

The screen configuration module 162 may control to configure a screen to be displayed on the display unit 130 in regard to the location-based application/function and to display the screen on the display unit 130. For example, the screen configuration module 162 may configure a screen for executing the location-based application/function based on map data.

The screen configuration module 162 may be configured to control a content receiver recommendation UI based on information on recommended content receivers, which is transferred from the server 200, and to display the UI on the display unit 130 in response to a user's sharing request signal.

In an example, the screen configuration module 162 may configure the content receiver recommendation guide UI such that the UI includes identification items representing the recommended persons based on the information on recommended content receivers. For example, in the case of a location-based social network service, identification items may be configured of images or IDs registered by the respective recommended persons. Alternatively, the identification items may also be configured of names or images of friends registered in the electronic device.

The screen configuration module 162, when receiving sharing group information together with shared content received from another electronic device, may be configured to design a sharing group UI based on the sharing group information and to display the UI on the display unit 130. The sharing group UI may include identification items representing sharing counterparts included in the sharing group, and a sharing group addition item.

The group creation module 163 may create a sharing group based on information on recommended content receivers, which is transferred from the server 200, in response to a user input for making a request for creating a group. The group creation module 163 may make a control such that the server 200 is operated in conjunction with information on the created sharing group. For example, in cases where a location-based social network service is used, the group creation module 163 may transfer group information associated with content sharing to the information sharing control module 161. The information sharing control module 161 may share the created group information with other users.

The group creation module 163 may create and classify sharing groups based on a reference for selecting persons to be recommended as content receivers, which is transferred from the server 200. For example, the group creation module 163 may create a group of friends that have registered the current location as a point of interest in regard to the current location or like the current location, and a group of friends that exist near the current location.

The group creation module 163 may transfer the created group information to the screen configuration module 162. Based on the group information transferred from the group creation module, the screen configuration module 162 may configure a screen such that the created group information is output on a shared screen relating to content. For example, in cases where a specific photo is selected in a gallery app and a user input for making a request for sharing the selected specific photo is detected, the electronic device may output information on a group of recommended content receivers associated with the current location on the display unit 130.

Hereinafter, for convenience of description, a transmission side electronic device that requests a content receiver is defined as a first electronic device 101, and an electronic device of at least one content receiver that shares content with the first electronic device 101 is defined as a second electronic device 102. However, the electronic devices may perform both a transmission side operation and a reception side operation.

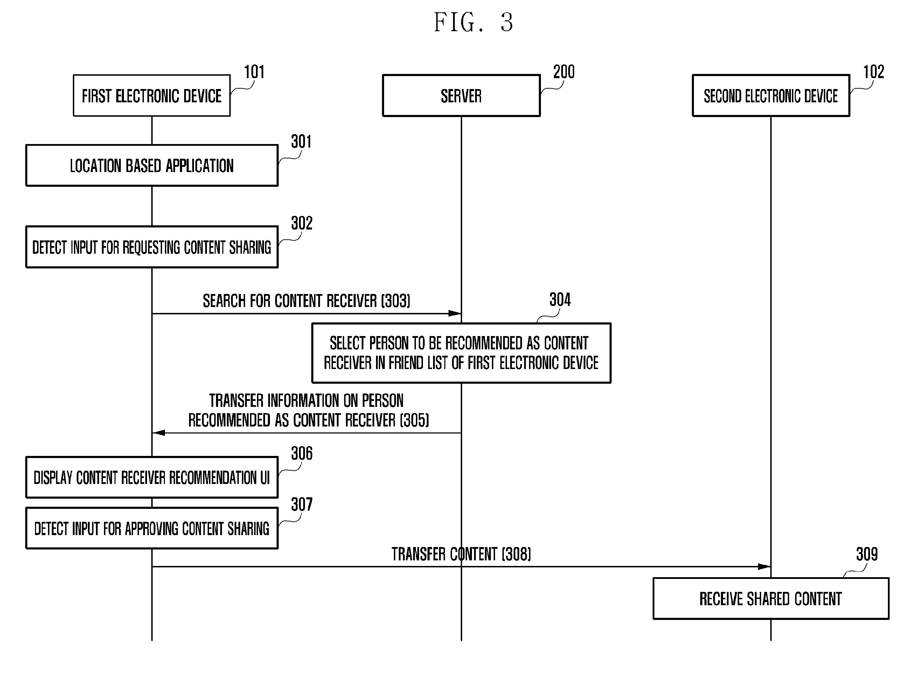

FIG. 3 is a diagram schematically illustrating an operation of a content receiver recommendation service operating system according to various embodiments.

Referring to FIG. 3, the content receiver recommendation service operating system may include a first electronic device 101, at a transmission side, which shares content, a server 200 that recommends content receiver information, and at least one second electronic device 102 that receives shared content.

First, in operation 301, the first electronic device 101 executes a location-based application in response to a user input for requesting the execution of the location-based application/function. The location-based application/function may be, but is not limited to, a camera function, a map service function, or a location based social network service application, and may include various applications that support location information sharing. For example, the first electronic device may execute a camera-based application that activates a camera module, or a gallery application that provides photos.

In operation 302, the first electronic device 101 detects an input for requesting sharing in regard to content in the executed application. For example, while a camera module is activated, the first electronic device 101 may detect an input for selecting a sharing menu for sharing a photographed image, or an input for selecting a sharing menu for sharing a photo selected from a photo gallery.

In operation 303, the first electronic device 101 transmits current location information thereof and a content receiver search request signal to the server 200 that supports a content receiver recommendation service. The first electronic device 101 may receive the current location information thereof through a GPS module, and may provide the coordinate information acquired through the GPS module to the server 200.

In operation 304, the server 200 analyzes location information and points of interest in a friend list registered in the first electronic device 101 to select persons to be recommended as content receivers in the friend list in response to the content receiver search request signal received from the first electronic device 101.

The server 200 may identify the friend list of the first electronic device 101 based on the pre-registered identification ID of the first electronic device 101. The server 200 may identify the specific place corresponding to the current location of the first electronic device 101, and may analyze points of interest, location information, and location paths of other electronic devices included in the friend list of the first electronic device. The server 200 may determine persons to be recommended as content receivers by selecting friends that have high correlation to the current location of the first electronic device 101 based on the analysis result.

In operation 305, the server 200 transmits information on recommended content receivers to the first electronic device 101. The information on recommended content receivers may include the identification (ID) information corresponding to the recommended content receivers.

In operation 306, the first electronic device 101 configures a content receiver recommendation UI based on the information on recommended content receivers which has been received from the server 200, and displays the UI on a display unit thereof.

The content receiver recommendation UI may be configured by distinguishing between the whole friend list registered in the first electronic device 101 and a list of the recommended content receivers, may be configured only with the list of the recommended content receivers, or may be configured by distinguishing between the groups of recommended persons according to a reference for selecting information on the recommended persons, which is received from the server 200. However, the present disclosure is not limited thereto.

In operation 307, the first electronic device 101 detects a user input for approving the content sharing.

For example, the first electronic device 101 may detect an input for selecting the content receivers included in the content receiver recommendation UI and an input for transmitting content while specific content is selected. In another example, the first electronic device 101 may select the content receivers included in the content receiver recommendation UI, and may detect an input for requesting the creation and transmission of content.

In operation 308, the first electronic device 101 transmits content to the electronic devices (e.g., the second electronic device 102) of the selected content receivers in response to the user input for approving the content sharing. In operation 309, the second electronic device 102 receives the content from the first electronic device 101.

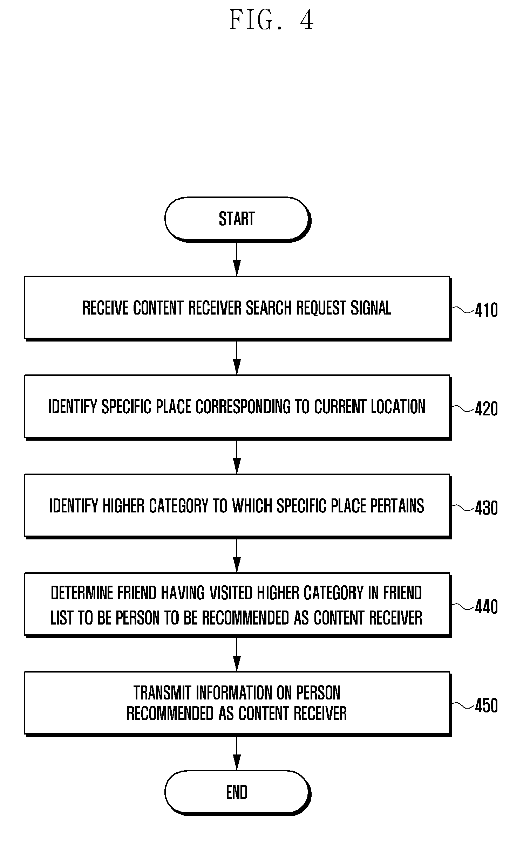

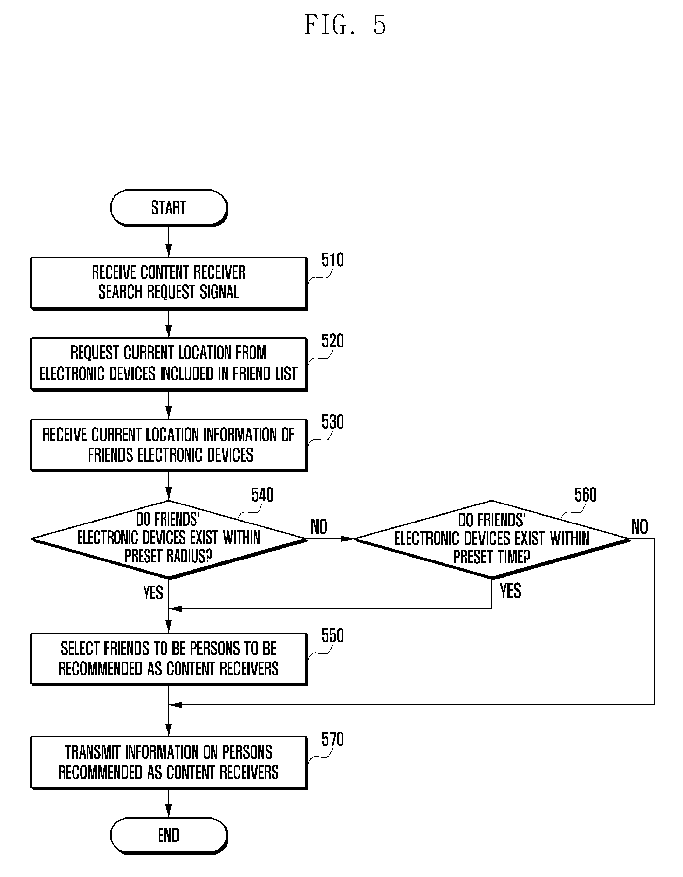

Hereinafter, an operation of selecting persons to be recommended by a server will be described with reference to FIGS. 4 and 5, and the server may be an electronic device.

FIG. 4 is a flowchart illustrating an operation of selecting, by a server, a person to be recommended according to various embodiments.

Referring to FIG. 4, in operation 410, the server (e.g., reference numeral 200 of FIG. 1) receives a content receiver search request signal from one electronic device registered in the server 200.

In operation 420, the server 200 identifies the current location of the electronic device having transmitted the signal (hereinafter, referred to as the search request device) and a specific place corresponding to the current location in response to the content receiver search request signal. The server 200 may identify the specific place or building name corresponding to the current location by comparing and analyzing the current location of the search request device and a POI DB.

In operation 430, the server 200 identifies the broader category to which the identified specific place pertains. For example, in cases where the current location of the search request device corresponds to the "Hyowon Park," the server 200 may identify that the place name called the Hyowon Park pertains to a "park category" in the POI DB.

In operation 440, the server 200 analyzes location information in a friend list of the search request device to select friends associated with the current location of the search request device. For example, the server 200 may identify identification information of friends' electronic devices in the friend list DB based on the identification information of the search request device, and may analyze places where the friends have visited, or points of interest where the friends have been registered, through a visit history DB. The server 200 may select friends that have visited the current location or have registered the current location as a point of interest. Alternatively, the server 200 may select friends that have visited the higher category for the current location within a preset time among the friends. The server 200 may deem the selected friends to be recommended content receivers.

In operation 450, the server 200 determines the selected friends to be recommended content receivers and transfers information thereon to the search request device.

FIG. 5 is a flowchart illustrating an operation of selecting, by a server, a person to be recommended according to various embodiments.

Referring to FIG. 5, the server (e.g., reference numeral 200 of FIG. 1), according to the various embodiments, receives a content receiver search request signal from one electronic device registered in the server 200 in operation 510.

In operation 520, the server 200 requests the current location information of other electronic devices included in a friend list of the search request device in response to the content receiver search request signal. For example, the server 200 may request the location information from the friends' electronic devices, or may request the location information from a base station.

In operation 530, the server 200 receives the location information of the other electronic devices included in the friend list of the search request device. For example, the server 200 may acquire the location information from the friends' electronic device, or may acquire the location information from at least one of a base station signal, information of a wireless access point (AP) that is received through Wi-Fi, and a location value acquired from a fixed GNSS.

In operation 540, based on the received location information of the friends' electronic devices, the server 200 determines whether the friends' electronic devices exist within a radius that is set on the basis of the current location of the search request device.

For example, the server 200 may identify whether the friends' electronic devices are located within a preset radius (e.g., 4 kilometers), and may select friends that use their electronic devices within the preset radius.

In operation 550, in cases where the friends' electronic devices exist within the preset radius based on the current location of the search request device, the server 200 selects the existing friends to be recommended content receivers.

In an embodiment, in cases where a plurality of friends exist within the preset radius, the server 200 may also assign priorities to friends that have continually transmitted the location information thereof at the current location. The server 200 may select the friends to be recommended content receivers in descending order of priorities.

In cases where the friends do not exist within the preset radius based on the current location of the search request device, the server 200 proceeds to operation 560 and determines whether the friends have visited the current location of the search request device within a preset time (e.g., one hour). For example, the server 200 may identify electronic devices of the friends that have visited the current location of the search request device by using a location history DB and a visit history DB.

In cases where the friends have visited the current location of the search request device within the preset time, the server 200 proceeds to operation 550 and selects the friends having visited the current location to be persons to be recommended as content receivers. Meanwhile, the server may exclude second electronic devices, which have not visited the current location of the search request device within the preset time, from recommended content receivers.

In operation 570, the server 200 determines the selected friends to be recommended content receivers and transfers information thereon to the search request device.

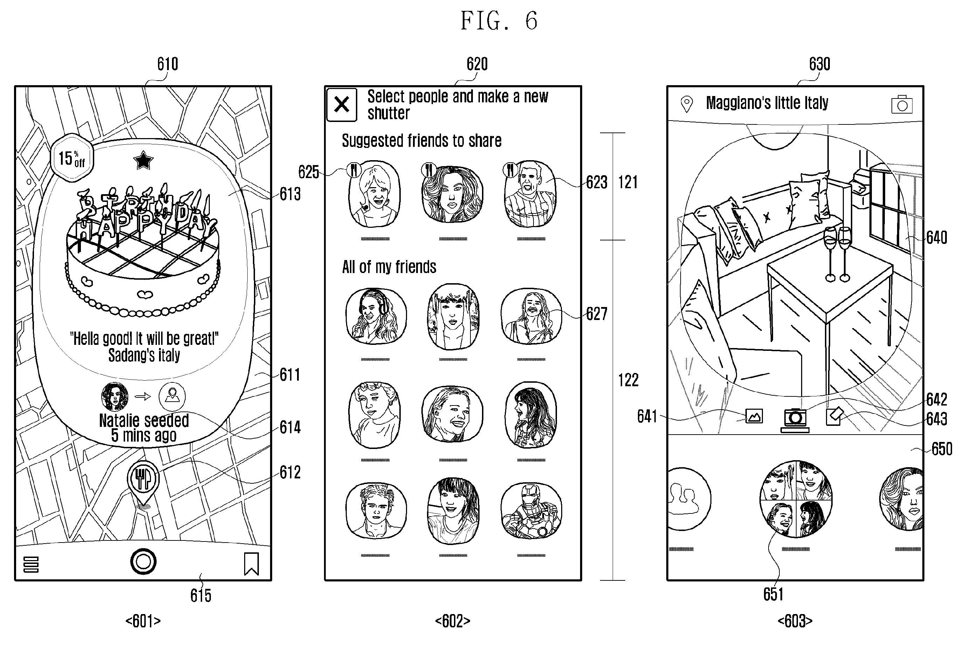

FIG. 6 illustrates an example of a content receiver recommendation service screen in an electronic device according to various embodiments.

Referring to FIG. 6, the electronic device (e.g., reference numeral 100 of FIG. 2), according to the various embodiments, may execute a location-based application that shares current location information or related information based on map data. For example, the location-based application may be, but is not limited to, a location-based social network service application that shares a photo stored in regard to the current location or a photo taken through a camera with other users.

A display unit (reference numeral 130 of FIG. 2) may display an execution screen UI 610 of the location-based application. For example, the execution screen UI 610 may include a map region 611, a content display region 613, and an application related menu region 615 as illustrated in 601 of FIG. 6. The map region 611 may be a region where a map image created based on the current location of the electronic device is displayed. The map region 611 may include a user location item 612 for displaying a user's location on the map. For example, in cases where the user is located in a restaurant, the electronic device may display a restaurant icon as the user location item 612 to indicate the user's current location.

According to an embodiment, the map region 611 may include, but is not limited to, friend location items for displaying location information of friends registered in the electronic device, items for points of interest that the user of the electronic device or the friends have previously registered, or the like. Whether to display the friend location items and the items for the points of interest may be determined according to setting information of the electronic device.

The content display region 613 may be a region where content to be shared is displayed, or a display region where content to be shared is created. For example, a default image may be displayed in the content display region when an application function is executed. In cases where the user calls a gallery function or activates a camera unit for content sharing, a photo or a preview image corresponding to that may be displayed.

The content display region 613 may include notification information 614 for guiding information on friends of interest in cases where friends associated with the current location of the electronic device exist. The user may identify information on friends associated with his/her current location through the notification information.

The menu region 615 may include various menu items associated with the use of the location based application.

When the user wants to share a photo, the user may select a sharer recommendation item among the menu items in the menu region 615, or may select the notification information 614 in the content display region.

In response to the selection, the electronic device may display a content receiver recommendation UI 620 on the display unit, as illustrated in 602 of FIG. 6, based on the information on recommended content receivers which is provided from a server.

According to an embodiment, the content receiver recommendation UI 620 may include a content receiver recommendation region 121 for outputting a list of friends associated with the current location of the electronic device and an all-friend region 122 for outputting a list of all friends registered in the electronic device. The content receiver recommendation UI 620 may include an identification image 623 and identification ID information for each of the friends registered in the electronic device.

The user may identify friends associated with the current location by identifying the list of friends which is output in the content receiver recommendation region 121. Further, in cases where the friends are related to a place category associated with the current place, the identification image may include an icon 625 for the corresponding place category.

The user may identify the list of friends which is output in the content receiver recommendation region 121, and may approve of content-sharing for a sharing group that is configured with persons recommended as content receivers.

For example, in cases where the user selects the friends which are output in the content receiver recommendation region, or the content receiver recommendation notification information, the electronic device may detect an approval input for the content sharing group.

The electronic device may output, on the display unit, a content sharing UI 630 for sharing content based on the content sharing group in response to the approval input as illustrated in 603 of FIG. 6.

The content sharing UI 630 may include a content region 640 for displaying shared content and a sharing group region 650 for displaying information of content receivers.

The content region 640 may be a region where shared content is displayed. The content region may include a photo item 641, a camera item 642, and a memo item 643. In cases where the user selects the photo item 641, the electronic device may call a photo gallery application and display the same in the content region 640. The user may select a photo to be shared through the photo gallery.

In cases where the user selects the camera item 642, the electronic device may activate a camera unit and display an image acquired through the camera unit in a preview format in the content region 640.

In cases where the user selects the memo item 643, the electronic device may call a function for a text input and display a text input region in the content region 640. The user may input text related to the current location and share the text with other users.

The sharing group region 650 may include a group item 651 for representing at least one piece of sharing group information. The group item 651 may support a shared-content transmitting function. The sharing group region 650 may support a longitudinal scrolling function, and the user may select the group item 651 for sharing content by using the scrolling function.

Further, in cases where the camera unit is activated, the sharing item 651 may support a shutter function. For example, the display unit may display a group item including selected content receivers as illustrated in 603 of FIG. 6. In this case, a preview image acquired from the camera unit may be displayed in the content region 640.

In cases where the user selects the group item 651, the electronic device may capture an image acquired from the camera unit in response to the selection and transmit the captured image to content receivers included in the group item.

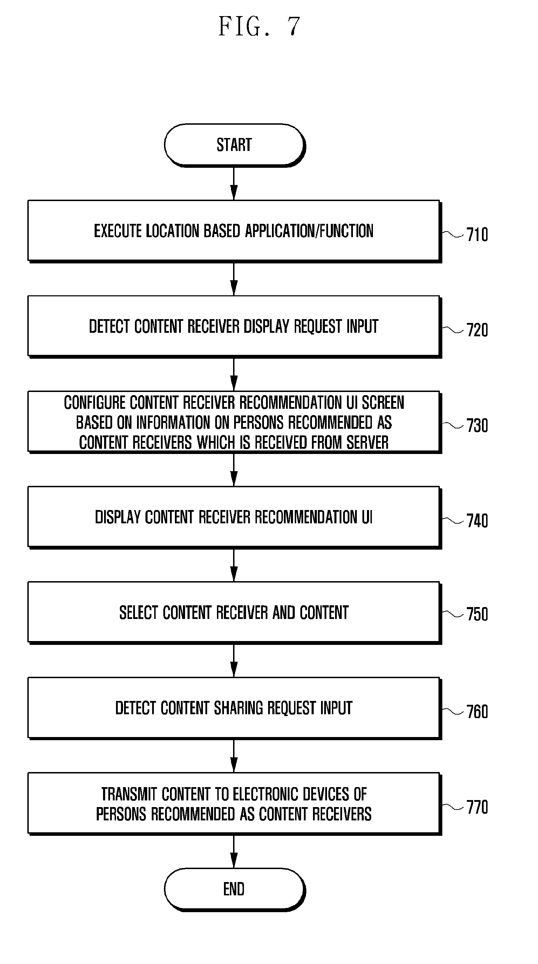

FIG. 7 is a flowchart illustrating a method of recommending a content receiver by an electronic device according to various embodiments.

Referring to FIG. 7, in operation 710, the controller 160 of the electronic device (e.g., reference numeral 100 of FIG. 2) executes a location-based application/function. In operation 720, the controller 160 detects a content receiver display request input in regard to content. For example, the controller 160 may activate a camera application and then detect a user input for selecting a content receiver display request item of a sharing menu. Alternatively, the controller 160 may activate a gallery application and detect a user input for selecting photo content and selecting an item for requesting the display of a content receiver on the selected content. Or, the controller 160 may also detect a user input for selecting a content sharing menu associated with the current location in a location-based social network service application.

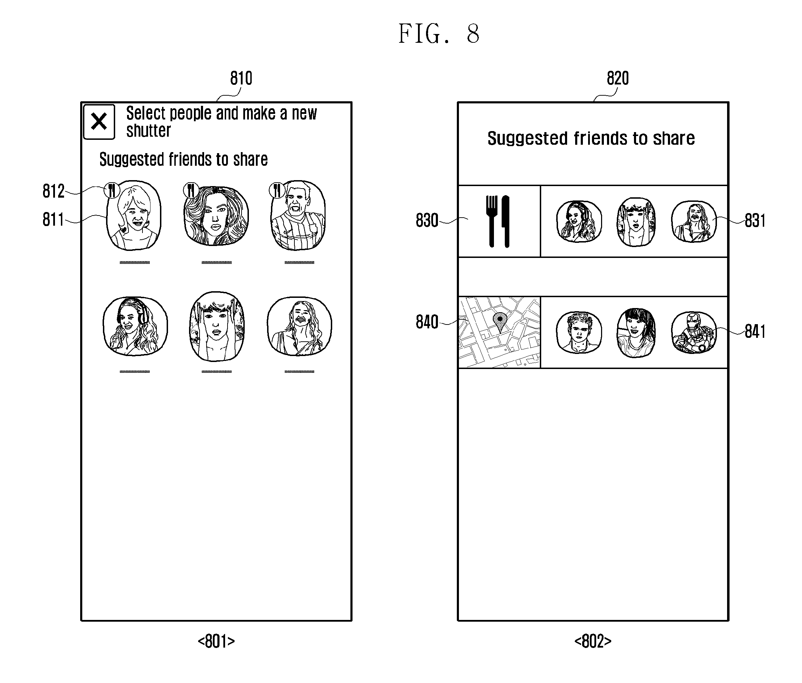

In operation 730, the controller 160 configures a content receiver recommendation UI based on content receiver recommendation information received from a server in response to the display request input. The content receiver recommendation UI may include, but is not limited to, a list of recommended persons associated with the current location in a friend list of the user and the whole friend list of the user as in the screen 602 of FIG. 6, and various embodiments of the content receiver recommendation UI will be described below with reference to FIG. 8.

In operation 740, the controller 160 displays the content receiver recommendation UI on the display unit. In operation 750, the controller 160 detects an input for selecting a content receiver and content to be shared. For example, the controller 160 may detect an input for selecting recommended persons on the screen 602 of FIG. 6 and may select content to be shared on the screen 603 of FIG. 6.

In operation 760, the controller 160 detects an input for requesting content sharing. For example, the controller 160 may select a group item for supporting a shutter button on the screen 603 of FIG. 6. In operation 770, the controller 160 transmits the content to electronic devices of the selected recommended content receivers in response to the content sharing input.

FIG. 8 illustrates an example of a content receiver recommendation UI of an electronic device according to various embodiments.

Referring to FIG. 8, the electronic device may provide a content receiver recommendation UI configured in various ways based on information on recommended content receivers.

According to various embodiments, the controller 160 of the electronic device may configure a content receiver recommendation UI 810 configured with recommended content receivers and may output the content receiver recommendation UI 810 on the display unit 130 as illustrated in 801 of FIG. 8. The UI screen 810 illustrated in 801 of FIG. 8 may include identification objects 811 of friends selected in regard to the current location and a sign item 812 for notifying of a selection reference by which the recommended content receivers are selected together with the identification objects 811. In cases where the current location corresponds to a restaurant, the sign item 812 may be provided as a restaurant category icon for friends that have registered restaurants as points of interest or have visited places that belong to a restaurant category.

According to various embodiments, as illustrated in 802 of FIG. 8, the controller 160 may distinguish between the recommended content receivers according to references for selecting the recommended persons, and may configure a content receiver recommendation UI 820 for each group to display it on the display unit 130. For example, a server may select the recommended persons through the operation illustrated in FIG. 4 or through the operation illustrated in FIG. 5.

Based on information on the recommended content receivers, the controller 160 may configure a group 830 of recommended content receivers that includes friends having registered the current place as a point of interest or having a visit history relating to the current place, and a group 840 of recommended content receivers that exist within a preset radius based on the current location. The respective groups of recommended content receivers may include identification objects 831 and 841 of the friends included therein.

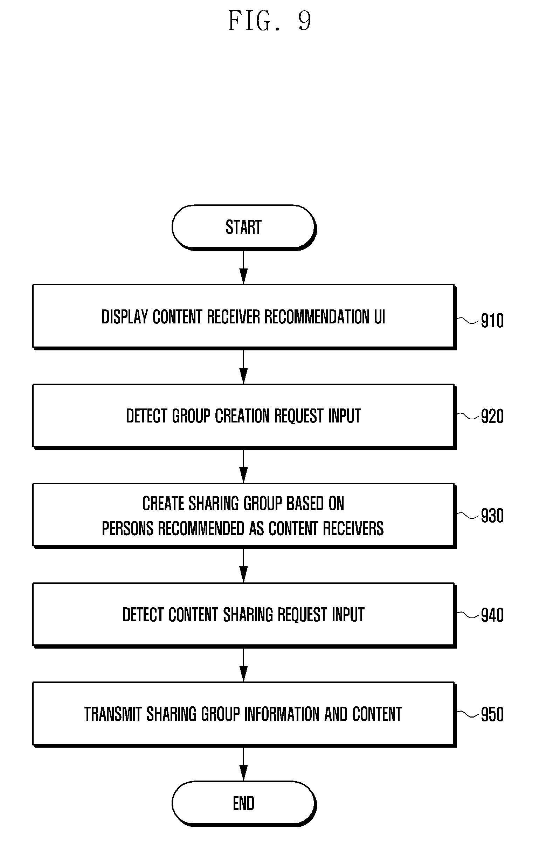

FIG. 9 is a flowchart illustrating a method of operating, by an electronic device, information on a group of recommended content receivers, according to various embodiments.

Referring to FIG. 9, the electronic device, according to the various embodiments, may support a function of creating a sharing group that includes recommended content receivers, which are provided from a server. An operation of a transmission side electronic device which provides content will hereinafter be described.

In operation 910, the controller 160 of the electronic device displays a content receiver recommendation UI on the display unit based on information on recommended content receivers. In operation 920, the controller 160 detects a user input for making a request for creating a sharing group. For example, the controller 160 may detect an input for selecting a sharing group creation menu item in the content receiver recommendation UI, or an input for selecting notification information for the recommended persons.

In operation 930, the controller 160 creates a sharing group based on information on the recommended persons included in the content receiver recommendation UI. In this process, the controller 160 may display the created sharing group on the group item 651 illustrated on the screen 603 of FIG. 6.

In operation 940, the controller 160 detects an input for requesting content sharing from the created sharing group. For example, the controller 160 may detect a touch input on the group item 651 illustrated on the screen 603 of FIG. 6. In this case, the group item may support a shutter function and a transmission function. The controller 160 may take a preview image in response to the touch input, determine the photographed image to be content to be shared, and identify a transmission input. In operation 950, the controller 160 transmits sharing group information included in the selected sharing group and the content to electronic devices of the content receivers included in the sharing group.

An operation of a reception side electronic device which receives shared content will hereinafter be described.

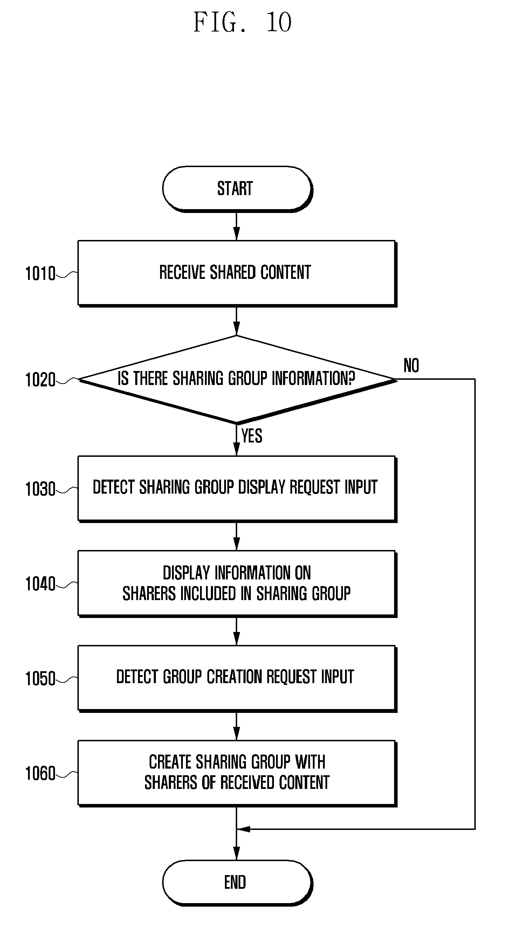

FIG. 10 is a flowchart illustrating a method of operating a content receiver recommendation service by a reception side electronic device according to various embodiments.

Referring to FIG. 10, a controller (e.g., reference numeral 160 of FIG. 2) of the reception side electronic device may receive shared content from another electronic device or a server in operation 1010. In this process, the controller 160 may display the received shared content on a display unit in response to a user approval input. In operation 1020, the controller 160 analyzes the received shared content to determine whether the sharing group information is included in the shared content. The sharing group information may include identification images or identification ID information of content receivers included in the sharing group.

In operation 1030, the controller 160 detects an input for requesting the display of the sharing group in cases where the sharing group information is included in the shared content. For example, in cases where the sharing group information is included in the shared content, the controller 160 may also provide notification information for notifying that the sharing group information is included in the shared content. The controller 160 may detect an input for selecting the notification information, or an input for requesting the display of the sharing group through a menu item for requesting the display of the sharing group.

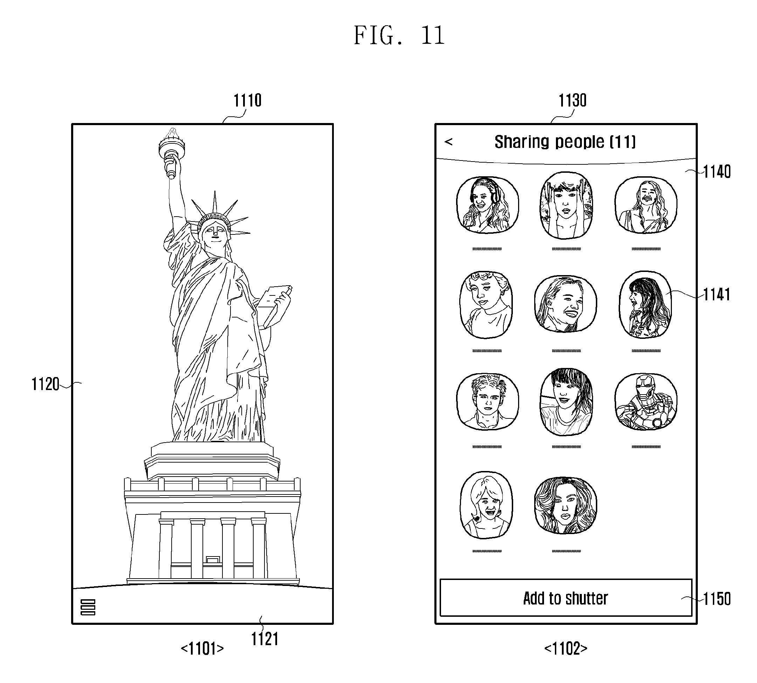

In operation 1040, the controller 160 displays information on sharers included in the sharing group. For example, the controller 160 may configure and display a sharing group UI based on identification images and identification IDs for the sharers included in the sharing group. The sharing group UI may include identification objects corresponding to the respective sharers included in the sharing group and a sharing group addition item. The sharing group UI will be described below in detail with reference to FIG. 11.

The controller 160 detects a group creation request input in operation 1050, and creates a sharing group with sharers of content received from another electronic device in response to the group creation request input in operation 1060.

FIG. 11 illustrates an example of a sharing group creation screen of a reception side electronic device according to various embodiments.

Referring to FIG. 11, the controller 160 of the reception side electronic device may display shared content UI 1110 received from another electronic device on the display unit 130 as illustrated in 1101 of FIG. 11. The shared content UI 1110 may include a region 1120 for displaying content received from or shared with the other electronic devices, and a menu region 1121 including a shared content related menu item. As illustrated in 1101 of FIG. 11, the shared content may be displayed in the full region. However, the shared content may also be displayed on map information, without being limited thereto. For example, in the case of a location based social network service, map information may be displayed as in the screen 601 of FIG. 6, and received shared content may be displayed in a content display region.

The controller 160, when detecting a user input for requesting the display of a sharing group, may display a sharing group UI 1130 on the display unit 130 as illustrated in 1102 of FIG. 11. The sharing group UI 1130 may include a sharer region 1140 for displaying sharers included in the received shared content, and a sharing group addition item 1150. The sharer region may include identification objects 1141 corresponding to the respective sharers.

A user may identify a list of other users that receive, from another electronic device, content received through the sharers displayed in the sharer region. For example, in cases where user A shares content relating to location B, user C may identify a list of other users associated with the location B through sharing group information of the content received from the user A.

In cases where the user selects the sharing group addition item 1150, the controller 160 may create a friend group or a sharing group including sharers of content received from another user.

The above-described embodiments of the present disclosure can be implemented in hardware, firmware or via the execution of software or computer code that can be stored in a recording medium such as a CD ROM, a Digital Versatile Disc (DVD), a magnetic tape, a RAM, a floppy disk, a hard disk, or a magneto-optical disk or computer code downloaded over a network originally stored on a remote recording medium or a non-transitory machine readable medium and to be stored on a local recording medium, so that the methods described herein can be rendered via such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein. Any of the functions and steps provided in the Figures may be implemented in hardware, or a combination hardware configured with machine executable code and may be performed in whole or in part within the programmed instructions of a computer. No claim element herein is to be construed under the provisions of 35 U.S.C. 112, sixth paragraph, unless the element is expressly recited using the phrase "means for". The terms "unit" or "module" referred to herein is to be understood as comprising hardware such as a processor or microprocessor configured for a certain desired functionality, or a non-transitory medium comprising machine executable code, in accordance with statutory subject matter under 35 U.S.C. §101 and does not constitute software per se.

The embodiments disclosed in the present specifications and drawings were provided merely to readily describe and to help a thorough understanding of the present disclosure but not intended to limit the scope of the present disclosure. Therefore, it should be construed that, in addition to the embodiments disclosed herein, all modifications and changes or modified and changed forms derived from the technical idea of the present disclosure fall within the scope of the present disclosure.

## Claims

1. An electronic device comprising:
a communication unit configured to communicate with an external device;
a display unit configured to display location information and shared content; and
a controller configured to process information on one or more recommended content receivers registered and available within a preset radius from a current location of the electronic device within a predetermined radius and to display the information related to the one or more recommended content receivers on the display unit in response to an input.

2. The electronic device of claim 1, wherein the communication unit is configured to share at least one of current location information, a list of friends, information on adding or changing a point of interest, and location information of the friends.

3. The electronic device of claim 1, wherein the controller is configured to detect an input for requesting the creation of a sharing group based on the recommended content receivers, to create a sharing group in response to the sharing group creation request, and to transmit the selected shared content in response to the an input for selecting sharing a content in the created sharing group.

4. The electronic device of claim 1, wherein the information on one or more recommended content receivers comprises identification information of a friend electronic device relating to the current location of the electronic device based on location information, location history information, or information on a point of interest of friends' electronic devices.

5. The electronic device of claim 4, wherein the information on one or more recommended content receivers is selected based on one or more of a history of at least one of a friend having visited the current location, a friend having registered the current location as a point of interest, a friend having visited a broader category place of the current location, a friend having visited the current location within a preset time, a friend existing within a preset radius based on the current location, and a friend having visited a location within the preset radius within a preset time.

6. The electronic device of claim 1, wherein the controller is configued to control at least one of a content receiver recommendation user interface comprising a list of all friends registered in the electronic device and a list of one or more recommended content receivers, a content receiver recommendation user interface comprising one or more recommended content receivers, and a content receiver recommendation user interface comprising a list of recommended persons, and to display the configured content receiver recommendation user interface on the display unit.

7. The electronic device of claim 6, wherein the content receiver recommendation user interface comprises an identification object corresponding to a friend's electronic device, and wherein the identification object comprises an identification image and identification information.

8. The electronic device of claim 7, wherein the identification object further comprises a display icon.

9. The electronic device of claim 1, wherein the controller is configured to receive content from the external device, display sharer information, and create a friend group.

10. A method of operating a content receiver recommendation service by an electronic device, comprising:
executing an application that supports a location-based service;
detecting an input for requesting display of content receiver recommendation information in the executed application;
processing information on one or more recommended content receivers registered and available from a current location of the electronic device within a preset radius; and
displaying, on a display unit, the information on one or more recommended content receivers based on the detected input.

11. The method of claim 10, wherein the executing further comprises:
transmitting current location information to a server; and
receiving information on one or more recommended content receivers that are selected from a friend list of an electronic device that is registered in a server.

12. The method of claim 11, further comprising:
sharing at least one of current location information, a friend list, information on adding or changing a point of interest, and friends' location information.

13. The method of claim 10, wherein the displaying further comprises:
configuring one or more of a user interface comprising a list of all friends registered in the electronic device and a list of one or more recommended content receivers, a user interface comprising a list of one or more recommended content receivers, and a user interface comprising a list of one or more recommended content receivers; and
displaying the user interface.

14. The method of claim 10, further comprising:
detecting an input for requesting creation of a group based on information on one or more recommended content receivers which is displayed on the display unit;
creating a sharing group;
detecting an input for selecting sharing a content in the created sharing group; and
transmitting the selected shared content to electronic devices.

15. A method of operating a content receiver recommendation service, comprising:
receiving content from an external device;
displaying, on a display unit,sharing group information configured with sharers included on the received content in response to a sharer display request ;
detecting a group creation request on the display unit; and
creating a friend groupbased on the sharers included in a sharing group in response to the group creation request.
